# EUROPÄISCHE PATENTSCHRIFT

(11) **EP 4 089 355 B1**
(45) Veröffentlichungstag und Bekanntmachung des Hinweises auf die Patenterteilung: **31.01.2024**
(21) Anmeldenummer: 21173308.4
(22) Anmeldetag: 11.05.2021
(51) Int. Cl.: F27B 1/00, C04B 20/06, F27B 1/10, F27D 3/18

(54) **VORRICHTUNG ZUR HERSTELLUNG EINES GEBLÄHTEN GRANULATS**
APPARATUS FOR PRODUCING BLOWN GRANULES
DISPOSITIF DE FABRICATION DE GRANULÉS EXPANSÉS

(43) Veröffentlichungstag der Anmeldung: 16.11.2022
(73) Patentinhaber: Omya International AG, 4665 Oftringen (CH)
(72) Erfinder: NEUBACHER, Julian, 8010 Graz (AT); TSCHERNKO, Harald, 8200 Gleisdorf (AT)
(74) Vertreter: KLIMENT & HENHAPEL

(56) Entgegenhaltungen:
- EP-A1- 2 876 398
- WO-A1-2013/053635
- US-A- 2 521 190
- US-A- 2 550 877
- US-A- 2 625 512
- US-A1- 2013 126 330

## Beschreibung

### GEBIET DER ERFINDUNG

Die vorliegende Erfindung betrifft eine Vorrichtung zur Herstellung eines geblähten Granulats aus sandkornförmigem, mineralischem Material mit einem Treibmittel, beispielsweise zur Herstellung eines geblähten Granulats aus Perlit- oder Obsidiansand mit gebundenem Wasser als Treibmittel, die Vorrichtung umfassend einen Ofen mit einem im Wesentlichen senkrecht stehenden Ofenschacht, der ein oberes Ende und ein unteres Ende aufweist, wobei zwischen den beiden Enden eine Förderstrecke verläuft, wobei weiters mindestens ein Zuführmittel vorgesehen ist, das dazu eingerichtet ist, zumindest das ungeblähte Material an einem der beiden Enden des Ofenschachts in Richtung des anderen der beiden Enden des Ofenschachts in den Ofenschacht aufzugeben, um das Material in einer Förderrichtung gesehen in der letzten Hälfte, vorzugsweise im letzten Drittel, der Förderstrecke zu blähen, wobei zumindest ein drehbarer Schachteinsatz vorgesehen ist, der zumindest abschnittsweise im Ofenschacht angeordnet ist und mindestens eine Abstreifklinge aufweist, die mit einer Innenwand des Ofenschachts zumindest einen eine Spaltbreite aufweisenden Spalt ausbildet und dazu eingerichtet ist, bei Drehung des zumindest einen Schachteinsatzes in einem Betriebszustand der Vorrichtung Anbackungen auf der Innenwand abschnittsweise abzutragen, wenn eine Dicke der Anbackungen größer als die jeweilige Spaltbreite ist, wobei der zumindest eine Schachteinsatz um zumindest eine Drehachse drehbar ist, die parallel zu einer Längsachse des Ofenschachts verläuft, wobei vorzugsweise die zumindest eine Drehachse mit der Längsachse zusammenfällt.

### STAND DER TECHNIK

Aus der WO 2013/053635 A1 sind ein Verfahren und eine Vorrichtung zum, insbesondere geschlossenzelligen, Blähen von sandkornförmigem, mineralischem Material, welches ein Treibmittel - wie z.B. gebundenes Wasser - enthält, bekannt. Dabei wird das Material in einen Ofen mit einem im Wesentlichen senkrecht stehenden Ofenschacht von oben aufgegeben. Mittels der Schwerkraft wird das Material durch den Ofenschacht von dessen oberem Ende zu dessen unterem Ende entlang einer Förderstrecke in einer Förderrichtung gefördert. Die Förderstrecke führt dabei durch mehrere, in Förderrichtung voneinander getrennt angeordnete Heizzonen mit unabhängig voneinander steuerbaren Heizelementen, um das Material auf eine kritische Temperatur zu erhitzen und die Sandkörner zu blähen. Der Blähvorgang verläuft isenthalp und geht entsprechend mit einem Temperatursturz einher, der detektiert werden kann. Das geblähte Granulat wird am unteren Ende ausgetragen. Aufgrund von im Ofenschacht auftretenden Auftriebskräften, die u.a. durch die Kaminwirkung des Ofenschachts ausgelöst werden und sich durch die unterschiedliche Dichte vor und nach der Expansion verschieden stark auswirken, eignet sich diese Art zu blähen für Rohsande mit Körnungen von typischerweise größer gleich 75 µm, insbesondere größer gleich 100 pm. Bei feineren Körnungen werden die Auftriebskräfte zu groß für ein zuverlässiges Bläh- bzw. Expansionsergebnis. Darüberhinaus kommt es bei feinen Körnungen zur erhöhten Gefahr einer Agglomeration bzw. "Anbackung" an der Innenwand des Ofenschachts, weil zu leichte Partikel bzw. Partikel mit zu geringer Dichte zu lange in der Heizzone schweben. Die Partikel nehmen in diesem Fall nach der Expansion weiter Energie auf und erweichen nochmals, ohne dass es durch isenthalpe Formänderung zu einer Abkühlung kommen kann, was wiederum die Gefahr der Agglomeration bzw. von Anbackungen an der Innenwand des Ofenschachts deutlich erhöht. Diese Gefahr nimmt mit enger werdendem Kornband zu, da - bildlich gesprochen - nicht mehr genug gröbere und damit gleichzeitig schwerere Partikel vorhanden sind, die die feineren Partikel gegen die Auftriebskräfte mitziehen.

Um Rohsande mit feineren Körnungen zu blähen, ist es aus der WO 2016/191788 A1 sowie aus der WO 2018/191763 A1 bekannt, das Material gemeinsam mit einer Luftmenge von unten nach oben in den Ofenschacht aufzugeben bzw. einzublasen und durch den Ofenschacht zu befördern. Es zeigt sich, dass bei Aufgabe sehr feiner Körnungen in Kombination mit dem Einblasen unterschiedliche Strömungen synchronisiert werden müssen, um anschließend ein gleichförmiges Strömungsprofil durch den Ofenschacht zu erhalten und Turbulenzen zu vermeiden, da diese Agglomerationen/Anbackungen an der Schachtwand begünstigen. Solche Agglomerationen/Anbackungen wiederum bewirken ein sukzessives "Zuwachsen" des Schachts und damit einhergehend eine Behinderung der Wärmestrahlung, was wiederum zu einem schlechteren Expansionsergebnis führt.

Ergänzend ist anzumerken, dass Anbackungen auch beim Blähen von Sanden gröberer Körnungen in der Regel nicht gänzlich zu vermeiden sind und das Expansionsergebnis negativ beeinflussen können.

Aus der US 2625512 A, der US 2521190 A sowie der US 2550877 A ist jeweils ein Brennofen mit senkrechtem Ofenschacht zum Expandieren von Perlitsand bekannt. Der Perlitsand wird von oben in den Ofenschacht aufgegeben und zur Blähung am oberen Ende des Ofenschachts mittels eines ringförmigen Gasbrenners erhitzt. Ein wassergekühltes Rohr ist im Ofenschacht angeordnet und wird um die vertikale Achse des Ofenschachts gedreht, um Anbackungen des expandierten Perlitsands von der Innenwand des Ofenschachts abzuschaben.

### AUFGABE DER ERFINDUNG

Es ist daher Aufgabe der vorliegenden Erfindung, eine Vorrichtung zur Herstellung eines geblähten Granulats zur Verfügung zu stellen, die die oben genannten, mit Anbackungen verbundenen Nachteile überwindet. Insbesondere soll eine gleichmäßige, konstante Expansion ermöglicht werden, vorzugsweise für einen möglichst breiten Bereich an Körnungen.

### DARSTELLUNG DER ERFINDUNG

Kern der Erfindung ist die Überlegung, dass Anbackungen ("Agglomerationen") des sandkornförmigen, mineralischen Materials an bzw. auf der Innenwand des Ofenschachts unvermeidbar sind und daher miteinbezogen werden müssen, um einen definierten Blähprozess zu erzielen. Hierzu ist es bei einer Vorrichtung zur Herstellung eines geblähten Granulats aus sandkornförmigem, mineralischem Material mit einem Treibmittel, beispielsweise zur Herstellung eines geblähten Granulats aus Perlit- oder Obsidiansand mit gebundenem Wasser als Treibmittel, die Vorrichtung umfassend einen Ofen mit einem im Wesentlichen senkrecht stehenden Ofenschacht, der ein oberes Ende und ein unteres Ende aufweist, wobei zwischen den beiden Enden eine Förderstrecke verläuft, wobei weiters mindestens ein Zuführmittel vorgesehen ist, das dazu eingerichtet ist, zumindest das ungeblähte Material an einem der beiden Enden des Ofenschachts in Richtung des anderen der beiden Enden des Ofenschachts in den Ofenschacht aufzugeben, um das Material in einer Förderrichtung gesehen in der letzten Hälfte, vorzugsweise im letzten Drittel, der Förderstrecke zu blähen, wobei zumindest ein drehbarer Schachteinsatz vorgesehen ist, der zumindest abschnittsweise im Ofenschacht angeordnet ist und mindestens eine Abstreifklinge aufweist, die mit einer Innenwand des Ofenschachts zumindest einen eine Spaltbreite aufweisenden Spalt ausbildet und dazu eingerichtet ist, bei Drehung des zumindest einen Schachteinsatzes in einem Betriebszustand der Vorrichtung Anbackungen auf der Innenwand abschnittsweise abzutragen, wenn eine Dicke der Anbackungen größer als die jeweilige Spaltbreite ist, wobei der zumindest eine Schachteinsatz um zumindest eine Drehachse drehbar ist, die parallel zu einer Längsachse des Ofenschachts verläuft, wobei vorzugsweise die zumindest eine Drehachse mit der Längsachse zusammenfällt, erfindungsgemäß vorgesehen, dass die Förderstrecke durch mehrere, in einer Förderrichtung voneinander getrennt angeordnete Heizzonen führt, wobei die Heizzonen jeweils zumindest ein voneinander unabhängig steuerbares Heizelement aufweisen, um das Material zumindest auf eine kritische Temperatur zu erhitzen und die Sandkörner zu blähen, und dass der zumindest eine Schachteinsatz jeweils einen Basiskörper aufweist, von dem die mindestens eine Abstreifklinge mit einem Richtungsanteil parallel zu einer Radialrichtung absteht, wobei die Radialrichtung in einer Ebene normal auf die Drehachse des jeweiligen Schachteinsatzes liegt und von der jeweiligen Drehachse ausgehend von dieser weg weist, wobei der jeweilige Basiskörper zumindest in Radialrichtung gesehen im Wesentlichen geschlossen ist.

Die Förderrichtung ist im Wesentlichen parallel zur Vertikalen bzw. zur Lotrichtung und kann von oben nach unten oder, umgekehrt, von unten nach oben weisen. D.h. der zumindest eine Schachteinsatz kann sowohl bei der Aufgabe des Materials von oben als auch bei der Aufgabe des Materials von unten vorgesehen sein. Bei der Aufgabe von oben wird das zu blähende Material zumindest teilweise mittels der Schwerkraft entlang der Förderstrecke gefördert und bildet dabei eine Partikelströmung im Ofenschacht aus. Als Zuführmittel für das zu blähende Material kann hierbei z.B. eine Schurre vorgesehen sein. Bei der Aufgabe von unten wird das zu blähende Material typischerweise gemeinsam mit einer Luftmenge in den Ofenschacht aufgegeben und durch den Ofenschacht befördert. Als Zuführmittel kann hier z.B. eine mit einem Ventilator zusammenarbeitende Ansaug-Düse vorgesehen sein, die dem Ofenschacht vorgeschaltet und dazu eingerichtet ist, das ungeblähte Material gemeinsam mit einer Luftmenge am unteren Ende des Ofenschachts in Richtung oberes Ende in den Ofenschacht einzusaugen. Die Luftmenge bildet dabei eine von unten nach oben strömende Luftströmung aus, mittels welcher das sandkornförmige Material in Form einer Partikelströmung durch den Ofenschacht von unten nach oben entlang der Förderstrecke gefördert wird, um in der oberen Hälfte, vorzugsweise im obersten Drittel, der Förderstrecke gebläht zu werden.

Die Heizelemente können zur Definition der Heizzonen herangezogen werden, da unterschiedliche Heizzonen jeweils zumindest ein Heizelement aufweisen müssen, wobei diese Heizelemente unabhängig voneinander steuerbar sein müssen.

Der Vollständigkeit halber wird festgehalten, dass in Förderrichtung gesehen die letzte Hälfte die zweite Hälfte ist bzw. das letzte Drittel das dritte Drittel.

Die Anbackungen werden erfindungsgemäß nun nicht mehr als prozessstörend angesehen, sondern mittels des zumindest einen Schachteinsatzes in ihrer Dicke kontrolliert, um damit vergleichmäßigend auf das Expansionsergebnis einzuwirken. Dabei bildet der Schachteinsatz mit seiner mindestens einen Abstreifklinge einen Spalt zwischen der Abstreifklinge und der Innenwand des Ofenschachts aus. Typischerweise liegt die Spaltbreite im Bereich von 2 mm bis 5 mm.

Im Betriebszustand der Vorrichtung, wenn Material durch den Ofenschacht gefördert und in diesem gebläht wird, ist der Spalt innerhalb kurzer Zeit mit Anbackungen belegt. Diese Anbackungen werden sodann kontinuierlich mittels der zumindest einen Abstreifklinge abgetragen, wenn sich der zumindest eine Schachteinsatz dreht, wobei das "Abtragen" ein Abscheren, Abstreifen, Abschneiden, Abstoßen oder Abschaben mitumfasst.

Durch das Abtragen wird die Dicke der Anbackungen begrenzt und bleibt annähernd konstant, genauer in einem gewissen Bereich rund um die Spaltbreite. Diese annähernd konstante, annähernd gleichmäßige Dicke der Anbackungen garantiert eine annähernd konstante Strahlungsintensität, die mittels der Heizelemente in den Ofenschacht - durch die Anbackungen hindurch - eingebracht werden kann. Der resultierende, annähernd bzw. im Wesentlichen konstante Energieeintrag in den Ofenschacht sorgt wiederum für eine gleichmäßige Blähung und gewährleistet im Wesentlichen während des gesamten Betriebs der Vorrichtung ein im Wesentlichen konstantes Expansionsergebnis.

Dass das Abtragen "zumindest abschnittsweise" stattfindet, ist so zu verstehen, dass einerseits in einer bestimmten Ebene normal auf eine Längsachse des Ofenschachts betrachtet das Abtragen nicht gleichzeitig um den gesamten Winkelbereich von 360° rund um die Längsachse herum stattfinden muss. Andererseits ergibt sich "abschnittsweise" in der Praxis auch bzw. schon allein deswegen, weil aufgrund des Spalts mit Spaltbreite größer null nicht die gesamte Dicke (lokal) der Anbackungen abgetragen wird, sondern eine gewisse Dicke der Anbackungen bewusst bestehen bleibt. D.h. sowohl Spalt bzw. Spaltbreite als auch die Dicke sind größer null zu verstehen.

Dabei ist in der Praxis aufgrund von Fertigungstoleranzen die Spaltbreite so zu verstehen, dass diese in einem gewissen Spaltbreitenbereich liegt bzw. leicht variieren kann.

Entsprechend ist in der Praxis auch die Dicke der Anbackungen als in einem Dickenbereich liegend anzusehen. Darüberhinaus ist die konkrete Dicke der Anbackungen zu einem bestimmten Zeitpunkt an einem bestimmten Ort im Ofenschacht das Resultat eines dynamischen Prozesses, der dazu führt, dass die Dicke nicht überall und zu jeder Zeit konstant ist, sondern in einem gewissen Bereich zeitlich und örtlich variiert, da ständig Anbackungen einerseits neu dazu kommen und andererseits abgetragen werden. Entsprechend können - vorübergehend, bis das Abtragen mittels der mindestens einen Abstreifklinge erfolgt - Bereiche entstehen, wo die Dicke größer als die Spaltbreite ist.

Zur gleichmäßigen Blähung bzw. zum konstanten und definierten Expansionsergebnis trägt außerdem bei, dass sich die Sandkörner im Ofenschacht als Partikelströmung entlang der Förderstrecke weitestgehend in wohldefinierten Bewegungsbereichen zwischen der Abstreifklinge oder den Abstreifklingen, dem restlichen Schachteinsatz und den Anbackungen bewegen. Entsprechend kann die Verweilzeit der Sandkörner im Ofenschacht - und damit der Blähvorgang bzw. das Blähresultat - recht genau festgelegt bzw. kontrolliert werden.

Die Innenwand an sich ist ohne die Anbackungen zu verstehen, die in ihrer Dicke in einem gewissen Bereich gehalten werden sollen. Beispielsweise kann ein Begrenzungselement, insbesondere in Form eines sog. Stahl-Liner, vorgesehen sein, um die Innenwand auszubilden. Dabei wäre es theoretisch auch möglich, dass die Innenwand nicht durch das Begrenzungselement bzw. den Stahl-Liner ausgebildet wird, sondern durch eine oder mehrere Schichten auf dem Begrenzungselement bzw. Stahl-Liner, bei welchen Schichten es sich aber nicht um die in ihrer Dicke zu kontrollierenden Anbackungen handelt. Entsprechend ist der Spalt mit seiner Spaltbreite zu verstehen, also bezogen auf die konkrete Innenwand ohne Anbackungen.

Die Spaltbreite und die Dicke der Anbackungen kann parallel zu einer radialen Richtung gemessen werden, die normal auf eine Längsachse des Ofenschachts steht und von einem radialen Zentrum des Ofenschachts, das typischerweise mit der Längsachse zusammenfällt, nach außen weist. Typischerweise steht diese radiale Richtung normal auf die Innenwand.

Der zumindest eine Schachteinsatz kann als herausnehmbar konzipiert sein, sodass zwischen unterschiedlichen Schachteinsätzen leicht gewechselt werden kann. Die unterschiedlichen Schachteinsätze können sich z.B. durch unterschiedliche Abstreifklingen, insbesondere was deren Anzahl und/oder Verlauf und/oder sich ergebende Spaltbreiten und/oder sich ergebende Bewegungsbereiche für die Sandkörner anbelangt, voneinander unterscheiden.

Der zumindest eine Schachteinsatz ist aus einem oder mehreren Materialien gefertigt, die die im Ofenschacht auftretenden Temperaturen aushalten. Besagte Materialien können z.B. Metalle, insbesondere Edelstähle oder Nickelbasislegierungen, oder Kohlefaser oder Keramik, insbesondere Hochleistungskeramik, umfassen.

Es sei bemerkt, dass der zumindest eine Schachteinsatz nicht vollständig im Ofenschacht angeordnet sein muss, sondern abschnittsweise auch aus dem Ofenschacht - am oberen und/oder unteren Ende - herausragen kann. Der jeweilige aus dem Ofenschacht herausragende Abschnitt kann sich als vorteilhaft für die Lagerung und/oder für den Antrieb des jeweiligen Schachteinsatzes erweisen.

Es ist aber auch denkbar, dass der zumindest eine Schachteinsatz vollständig im Ofenschacht angeordnet - und nur innerhalb von diesem gelagert - ist.

Der zumindest eine Schachteinsatz muss sich auch nicht über den gesamten Ofenschacht bzw. über dessen gesamte Länge oder über die gesamte Förderstrecke erstrecken.

Grundsätzlich kann ein einzelner Schachteinsatz vorgesehen sein. Dieser kann aus mehreren Teilen bzw. Segmenten aufgebaut sein. Typischerweise ist in diesem Fall der Schachteinsatz um eine Drehachse drehbar, die mit der Längsachse des Ofenschachts zusammenfällt. Letzteres kann auch der Fall sein, wenn mehrere Schachteinsätze vorgesehen sind, die in Förderrichtung gesehen hintereinander angeordnet sind. Hierbei wäre es z.B. vorstellbar, dass sich die unterschiedlichen Schachteinsätze unterschiedlich schnell drehen und/oder unterschiedliche Spaltbreiten ausbilden. In diesen Fällen ergibt sich bei Drehung des jeweiligen Schachteinsatzes bei einem Ofenschacht mit im Wesentlichen kreisförmigem Querschnitt (normal auf die Längsachse des Ofenschachts) effektiv jeweils ein Ringspalt zwischen der jeweiligen mindestens einen Abstreifklinge und der Innenwand des Ofenschachts. Entsprechend ist es bei der erfindungsgemäßen Vorrichtung vorgesehen, dass der zumindest eine Schachteinsatz um zumindest eine Drehachse drehbar ist, die parallel zu einer Längsachse des Ofenschachts verläuft, wobei vorzugsweise die zumindest eine Drehachse mit der Längsachse zusammenfällt.

Theoretisch sind bei mehreren Schachteinsätzen aber auch mehrere unterschiedliche Drehachsen möglich, auch wenn diese in Förderrichtung gesehen zumindest abschnittsweise hintereinander angeordnet sind.

Insbesondere wäre es auch vorstellbar, dass mehrere Schachteinsätze vorgesehen sind, die in Förderrichtung gesehen bzw. in einer Schnittebene normal auf die Längsachse betrachtet nebeneinander angeordnet sind und unterschiedliche Drehachsen aufweisen, wobei diese Drehachsen jeweils parallel zur Längsachse des Ofenschachts verlaufen können.

Analog zum oben Gesagten ist es bei einer bevorzugten Ausführungsform der erfindungsgemäßen Vorrichtung vorgesehen, dass der zumindest eine Schachteinsatz im Bereich des oberen Endes des Ofenschachts drehbar gelagert ist, wobei vorzugsweise der zumindest eine Schachteinsatz im Bereich des unteren Endes des Ofenschachts schwimmend gelagert ist.

Der Bereich des oberen Endes des Ofenschachts, in dem der zumindest eine Schachteinsatz drehbar gelagert ist, kann dabei außerhalb des Ofenschachts angeordnet sein. Neben einer konstruktiv einfachen und besonders stabilen mechanischen Lagerung wird hierdurch auch ein konstruktiv einfach zu realisierender (Dreh-)Antrieb des Schachteinsatzes ermöglicht.

Durch die schwimmende Lagerung wird im Betriebszustand der Vorrichtung bei unterschiedlichsten Drehgeschwindigkeiten des zumindest einen Schachteinsatzes jeweils ein besonders stabiler bzw. konstanter und definierter Spalt über seine gesamte Erstreckung parallel zur Förderstrecke erreicht. Eine besonders genau definierte Dicke der Anbackungen kann hierdurch erzielt werden und damit eine besonders hohe Vergleichmäßigung des Prozesses, was sich wiederum positiv auf das Expansionsergebnis auswirkt.

Der Bereich des unteren Endes des Ofenschachts, in dem der zumindest eine Schachteinsatz schwimmend gelagert ist, kann dabei außerhalb des Ofenschachts angeordnet sein.

Zur schwimmenden Lagerung kann beispielsweise ein Zentrierstift am Schachteinsatz vorgesehen sein, der entlang der Drehachse beweglich ("schwimmend") gelagert ist. Der Zentrierstift verläuft dabei entlang der Drehachse und ist, insbesondere in seiner entlang der Drehachse gemessenen Länge, so dimensioniert, dass das "Schwimmen" bzw. die bewegliche Lagerung bei sämtlichen auftretenden Wärmeausdehnungen des Schachteinsatzes gewährleistet ist.

Bei einer bevorzugten Ausführungsform der erfindungsgemäßen Vorrichtung ist vorgesehen, dass der zumindest eine Schachteinsatz mehrere, bevorzugt höchstens acht, besonders bevorzugt zwei bis vier, Abstreifklingen aufweist. D.h. die angegebene Anzahl kann als Gesamtanzahl angesehen werden und/oder als Anzahl der Abstreifklingen pro Schachteinsatz (wenn mehrere Schachteinsätze vorgesehen sein sollten). Mehrere Abstreifklingen sind im Hinblick auf die Genauigkeit, mit der der Blähvorgang eingestellt werden kann, von Vorteil. Beispielsweise lassen sich mit mehreren Abstreifklingen Spalte entlang der Förderstrecke unterschiedlich gestalten, um Einfluss auf den Blähprozess zu nehmen.

Die Anzahl der Abstreifklingen des jeweiligen Schachteinsatzes kann auch variabel gestaltet sein, beispielsweise indem die Abstreifklingen ein-/ausfahrbar sind oder eingesetzt/entfernt werden können.

Insbesondere wenn in einer umfänglichen Richtung rund um die Längsachse bzw. rund um das radiale Zentrum des Ofenschachts betrachtet mehrere Abstreifklingen hintereinander angeordnet sind, kann eine besonders gleichmäßige Dicke der Anbackungen im gesamten Winkelbereich rund um das radiale Zentrum erzielt werden, was wiederum zu einem besonders gleichmäßigen Bläh- bzw. Expansionsergebnis führt. Entsprechend ist es bei einer besonders bevorzugten Ausführungsform der erfindungsgemäßen Vorrichtung vorgesehen, dass in einer umfänglichen Richtung rund um ein radiales Zentrum des Ofenschachts gesehen zumindest zwei der Abstreifklingen hintereinander angeordnet sind. Selbstverständlich können auch mehr als zwei der Abstreifklingen, insbesondere alle Abstreifklingen, in umfänglicher Richtung gesehen hintereinander angeordnet sein.

Entsprechend der genannten erhöhten Gestaltungsmöglichkeit durch mehrere Abstreifklingen ist es bei einer besonders bevorzugten Ausführungsform der erfindungsgemäßen Vorrichtung vorgesehen, dass zumindest zwei der Abstreifklingen mit der Innenwand Spalte mit unterschiedlichen Spaltbreiten ausbilden. Dabei kann die Spaltbreite in Förderrichtung gesehen variieren, d.h. die Spalte mit unterschiedlichen Spaltbreiten können in Förderrichtung gesehen zumindest abschnittsweise hintereinander angeordnet sein. Hierdurch kann z.B. die Verweilzeit der Sandkörner in Zonen unterschiedlicher Temperatur beeinflusst werden.

Alternativ oder zusätzlich kann die Spaltbreite in umfänglicher Richtung gesehen variieren, d.h. die Spalte mit unterschiedlichen Spaltbreiten können umfänglicher Richtung gesehen zumindest abschnittsweise hintereinander angeordnet sein. Hierdurch kann z.B. der Prozess des Abtragens der Anbackungen optimiert werden, um eine gewünschte Dicke sehr genau einzustellen.

Je nach Temperatur und zu blähendem Material kann die Dicke der Anbackungen unterschiedlich schnell wachsen. Entsprechend kann es notwendig sein, das (abschnittsweise) Abtragen der Anbackungen zu beschleunigen oder ggf. zu verlangsamen. Insbesondere letzteres kann sich außerdem für die Einstellung gewünschter Partikelströmungen im Ofenschacht als vorteilhaft erweisen. Daher ist es bei einer bevorzugten Ausführungsform der erfindungsgemäßen Vorrichtung vorgesehen, dass zumindest ein Antriebsmittel zur Drehung des zumindest einen Schachteinsatzes mit einer variablen Drehgeschwindigkeit vorgesehen ist, wobei die Drehgeschwindigkeit bevorzugt im Bereich von 0,125 U/min ("Umdrehungen pro Minute") bis 3 U/min, besonders bevorzugt im Bereich von 0,5 U/min bis 2 U/min, liegt. Beispielsweise kann in der Praxis die Drehgeschwindigkeit im Bereich rund um 1 U/min eingestellt bzw. variiert werden.

Geeignete Antriebsmittel, die z.B. über zumindest eine Antriebswelle mit dem zumindest einen Schachteinsatz verbunden werden können, sind an sich bekannt. Beispielsweise eignen sich Elektromotoren als Antriebsmittel, wobei zur Drehgeschwindigkeitsvariation Getriebe oder änderbare Über- bzw. Untersetzungen vorgesehen sein können. Es wäre auch denkbar, einen oder mehrere Elektromotoren zu verwenden, dessen/deren Drehgeschwindigkeit mittels Frequenzumrichter/n variiert wird, um die Drehgeschwindigkeit des zumindest einen Schachteinsatzes zu variieren.

Bei der erfindungsgemäßen Vorrichtung ist vorgesehen, dass der zumindest eine Schachteinsatz jeweils einen Basiskörper aufweist, von dem die mindestens eine Abstreifklinge mit einem Richtungsanteil parallel zu einer Radialrichtung absteht, wobei die Radialrichtung in einer Ebene normal auf eine Drehachse des jeweiligen Schachteinsatzes liegt und von der jeweiligen Drehachse ausgehend von dieser weg weist, wobei der jeweilige Basiskörper zumindest in Radialrichtung gesehen im Wesentlichen geschlossen ist. Gemäß dieser Definition der Radialrichtung existieren unendlich viele Radialrichtungen in der genannten Ebene normal auf die Drehachse des jeweiligen Schachteinsatzes.

Es ist dabei nicht ausgeschlossen, dass andere Richtungsanteile ungleich null sind, sodass die mindestens eine Abstreifklinge "schief" vom jeweiligen Basiskörper absteht. Vorzugsweise sind die anderen Richtungsanteile jedoch null.

Mit "im Wesentlichen geschlossen" ist eine Geschlossenheit bis auf ggf. geringfügig vorhandene Öffnungen gemeint, die z.B. aufgrund von Fertigungsschritten mehr oder weniger unvermeidbar vorhanden sein können, aber vernachlässigbar sind. Die Geschlossenheit des Basiskörpers, insbesondere in der Radialrichtung, garantiert, dass die Sandkörner nicht aus ihren Bewegungsbereichen in den Basiskörper gelangen können. Entsprechend können die Sandkörner in den Bewegungsbereichen in definiertem Abstand zur Innenwand bzw. zu den Anbackungen geführt werden, um einen definierten Energieeintrag zu garantieren.

Bei einer besonders bevorzugten Ausführungsform der erfindungsgemäßen Vorrichtung ist vorgesehen, dass der jeweilige Basiskörper im Wesentlichen drehzylinderförmig ist, wobei vorzugsweise in Förderrichtung gesehen vor und/oder nach dem jeweiligen Basiskörper ein sich entlang der Drehachse und vom Basiskörper weg verjüngender Schachteinsatzabschnitt, insbesondere bündig, anschließt. Grundsätzlich sind aber auch andere Formen des Basiskörpers denkbar, wobei es sich vorzugsweise um die Form eines Drehkörpers handelt, beispielsweise um eine konische Form oder um die Form eines Kegelstumpfes.

Die Verjüngung des Schachteinsatzabschnitts bzw. der Schachteinsatzabschnitte erfolgt vom jeweiligen Basiskörper weg, was sich strömungstechnisch als sehr günstig erweist. D.h. die Partikelströmung bzw. die Sandkörner werden durch die konische Form des jeweiligen Schachteinsatzabschnittes stetig in Richtung Basiskörper und damit in die Bewegungsbereiche geleitet bzw. aus den Bewegungsbereichen stetig vom Basiskörper wieder weg.

Grundsätzlich sind dabei unterschiedlichste konkrete Formen der Schachteinsatzabschnitte denkbar. Vorzugsweise sind die Schachteinsatzabschnitte konisch oder kegelstumpfförmig ausgebildet.

Der/die Schachteinsatzabschnitt(e) sowie der Basiskörper stellen unterschiedliche Segmente des Schachteinsatzes ("Schachteinsatzsegmente") dar.

Der oder die sich verjüngenden Schachteinsatzabschnitte sind vorzugsweise ebenfalls zumindest in Radialrichtung gesehen im Wesentlichen geschlossen. Dies stellt sicher, dass im Bereich des jeweiligen Schachteinsatzabschnittes keine Sand- bzw. Granulatkörner in den Schachteinsatz gelangen, sondern sich ausschließlich zwischen Schachteinsatz und Anbackungen (ggf. Innenwand) durch den Ofenschacht mit einem Richtungsanteil parallel zur Förderrichtung bewegen können. Prinzipiell kann vorgesehen sein, dass der Schachteinsatz - ohne Einschränkung auf die Radialrichtung - im Wesentlichen geschlossen ist, sodass Sandpartikel nicht in den Schachteinsatz gelangen können. Vorzugsweise ist der Schachteinsatz dabei als Hohlkörper mit einem Innenraum ausgeführt, um Material und Gewicht zu sparen. Dabei können am Schachteinsatz, insbesondere am Basiskörper und/oder an dem/den ggf. vorhandenen Schachteinsatzabschnitt/en, kleine Druckentlastungsöffnungen vorgesehen sein, um Luft bzw. Gas, die bzw. das sich im Innenraum des Schachteinsatzes befindet und sich temperaturbedingt ausdehnt (bzw. zusammenzieht), den Durchtritt aus dem (bzw. in den) Innenraum des Schachteinsatzes zu ermöglichen und so einen Druckausgleich zu bewirken.

Zur besseren Einstellbarkeit des Blähvorgangs ist es bei einer besonders bevorzugten Ausführungsform der erfindungsgemäßen Vorrichtung vorgesehen, dass die mindestens eine Abstreifklinge am jeweiligen Basiskörper aus-/einfahrbar und/oder verschwenkbar angeordnet ist, um die Spaltbreite einstellen zu können. Das Ausfahren zum Verkleinern der Spaltbreite bzw. das Einfahren zum Vergrößern der Spaltbreite kann dabei mit einem Richtungsanteil in oder gegen die Radialrichtung erfolgen.

Das Verschwenken erfolgt jeweils um eine Schwenkachse, die vorzugsweise parallel zur Längsachse bzw. zur jeweiligen Drehachse ist. Andere Anordnungen der jeweiligen Schwenkachse, bei denen sich aufgrund der Schwenkbewegung der jeweiligen Abstreifklinge die Spaltbreite ändert, sind aber natürlich ebenfalls denkbar.

Um die mindestens eine Abstreifklinge konstruktiv besonders einfach auszugestalten, ist es bei einer bevorzugten Ausführungsform der erfindungsgemäßen Vorrichtung vorgesehen, dass die mindestens eine Abstreifklinge im Wesentlichen geradlinig verläuft, vorzugsweise parallel zur Förderrichtung.

Insbesondere kann die jeweilige Abstreifklinge parallel zur Längsachse des Ofenschachts bzw. zur Drehachse des jeweiligen Schachteinsatzes verlaufen.

Um den Weg, den die Sand- bzw. Granulatkörner durch die Bewegungsbereiche machen müssen, besonders lang zu gestalten und damit die thermische Behandlung der Körner im Ofenschacht besonders lange durchführen zu können, ist es bei einer bevorzugten Ausführungsform der erfindungsgemäßen Vorrichtung vorgesehen, dass die mindestens eine Abstreifklinge zumindest abschnittsweise spiralförmig bzw. schraubenförmig um eine Drehachse des jeweiligen Schachteinsatzes verläuft. Die einzelne Abstreifklinge muss dabei nicht vollständig um die Drehachse verlaufen, sondern kann auch bloß einen wesentlich kleineren Winkelbereich als 360° abdecken.

Gemäß dem oben Gesagten können bei mehreren Schachteinsätzen die spiralförmig verlaufenden Abstreifklingen theoretisch auch um unterschiedliche Drehachsen zumindest abschnittsweise spiralförmig verlaufen.

Es sei bemerkt, dass bei mehreren Abstreifklingen sowohl geradlinig verlaufende als auch spiralförmig verlaufende Abstreifklingen - also auch mehrere geradlinig verlaufende und/oder mehrere spiralförmig verlaufende Abstreifklingen - vorgesehen sein können. Die Bewegungsbereiche für die Sand- bzw. Granulatkörner können entsprechend variantenreich gestaltet werden.

Es sei bemerkt, dass analog zum oben Gesagten durch entsprechende Gestaltung der zumindest einen spiralförmig verlaufenden Abstreifklinge die Spaltbreite in umfänglicher Richtung gesehen variierend gestaltet sein kann - d.h. dass bei einer besonders bevorzugten Ausführungsform der erfindungsgemäßen Vorrichtung es vorgesehen ist, dass in einer umfänglichen Richtung rund um ein radiales Zentrum des Ofenschachts gesehen die Spaltbreite variiert. Hierbei ist die Variation der Spaltbreite des Spalts, der durch die spiralförmig verlaufende Abstreifklinge und die Innenwand ausgebildet wird, aufgrund der Spiral- bzw. Schraubenform auch in Förderrichtung gesehen gegeben. Wie gesagt, fällt das radiale Zentrum typischerweise mit der Längsachse des Ofenschachts zusammen. D.h. die Spaltbreite kann in umfänglicher Richtung gesehen - aber auch in Förderrichtung gesehen - variieren, auch wenn nur eine einzige spiralförmig verlaufende Abstreifklinge vorgesehen ist.

Gemäß dem oben Gesagten ist es bei einer bevorzugten Ausführungsform der erfindungsgemäßen Vorrichtung vorgesehen, dass in Förderrichtung gesehen die Spaltbreite des mindestens einen Spalts variiert. Dies kann sowohl mit geradlinig verlaufenden als auch mit zumindest abschnittsweise spiralförmig verlaufenden Abstreifklingen realisiert werden.

Insbesondere kann hierdurch unterschiedlichen Stadien der Blähung Rechnung getragen werden und kann die Verweilzeit in entlang der Förderrichtung unterschiedlichen Abschnitten des Ofenschachts beeinflusst werden. Beispielsweise kann in Förderrichtung gesehen eine kontinuierliche Zunahme oder Abnahme der Spaltbreite erreicht werden.

Bei einer bevorzugten Ausführungsform der erfindungsgemäßen Vorrichtung ist vorgesehen, dass die Innenwand durch mindestens ein Begrenzungselement ausgebildet ist, welches vorzugsweise aus hochwarmfestem Stahl gefertigt ist, und dass der zumindest eine Schachteinsatz aus dem gleichen Material wie das mindestens eine Begrenzungselement gefertigt ist. Durch besagte Materialwahl wird die Erfüllung der gleichen Leistungsanforderungen an das Begrenzungselement wie für Schachteinsatz sichergestellt. Weiters hat die gleiche Materialwahl auch gleiche Wärmeausdehnungskoeffizienten zur Folge, wodurch ein Verzug durch unterschiedliche Wärmeausdehnung vermieden und eine gleichbleibende Spaltform bzw. Spaltgröße sichergestellt werden kann.

Vorzugsweise ist der Ofen in radialer Richtung gesehen hinter dem Begrenzungselement aus einem oder mehreren anderen Materialien aufgebaut, insbesondere aus thermisch isolierenden Materialien.

Bei hochwarmfestem Stahl handelt es sich um an sich bekannte Sorten von Edelstahl.

Zum einen lässt sich mit Hilfe des Begrenzungselements auf konstruktiv einfache Weise erreichen, dass das in den Ofenschacht aufgegebenen Material nicht mit Heizelementen in Berührung kommen kann, die in radialer Richtung gesehen hinter dem Begrenzungselement angeordnet sind. Zum andern lässt sich mittels des mindestens einen Begrenzungselements eine gewünschte, insbesondere kreisförmige, Querschnittsform des Ofenschachts sehr leicht möglichst exakt realisieren und ggf. für unterschiedliche Anwendungen anpassen.

Die richtige bzw. eine geeignete Materialwahl des Begrenzungselements erlaubt dessen Einsatz in sämtlichen Temperaturbereichen, die in der Praxis eine Rolle spielen, ohne dass das Begrenzungselement in seiner Funktionsfähigkeit beeinträchtigt wird oder gar zu Schaden kommt. Beim Blähen von Perlit oder Obsidian kommen insbesondere metallische Materialien in Betracht. Es wäre in diesem Zusammenhang auch denkbar, das Begrenzungselement - insbesondere für andere Minerale, die eine höhere Kalziniertemperatur erfordern - nicht aus Metall, sondern aus einem anderen geeigneten Material, z.B. aus Kohlefaser oder (Hochleistungs-)Keramik, herzustellen.

Wie bereits erwähnt, kann der Schachteinsatz aus mehreren Teilen bzw. Segmenten bestehen. Diese können insbesondere beim Ein- und Ausbau des Schachteinsatzes zusammengesetzt und auseinander genommen werden, was den jeweiligen Vorgang vereinfacht. Dies gilt insbesondere für den Basiskörper. Entsprechend ist es bei einer besonders bevorzugten Ausführungsform der erfindungsgemäßen Vorrichtung vorgesehen, dass der Basiskörper aus mehreren Teilsegmenten aufgebaut ist, die lösbar miteinander verbunden sind. Dies ermöglicht das Zusammensetzen und problemlose Zerlegen des Basiskörpers beim Ein- und Ausbau. Die lösbare Verbindung der Teilsegmente kann in an sich bekannter Weise realisiert sein, beispielsweise durch Verschraubung.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht einer ersten Ausführungsform der erfindungsgemäßen Vorrichtung, wobei eine Längsachse eines Ofens der Vorrichtung in der Schnittebene liegt
- Fig. 2: eine schematische Schnittansicht der Vorrichtung aus Fig. 1 von oben, wobei die Schnittebene normal auf die Längsachse steht
- Fig. 3: eine schematische Schnittansicht einer zweiten Ausführungsform der erfindungsgemäßen Vorrichtung, wobei die Längsachse des Ofens der Vorrichtung in der Schnittebene liegt

### WEGE ZUR AUSFÜHRUNG DER ERFINDUNG

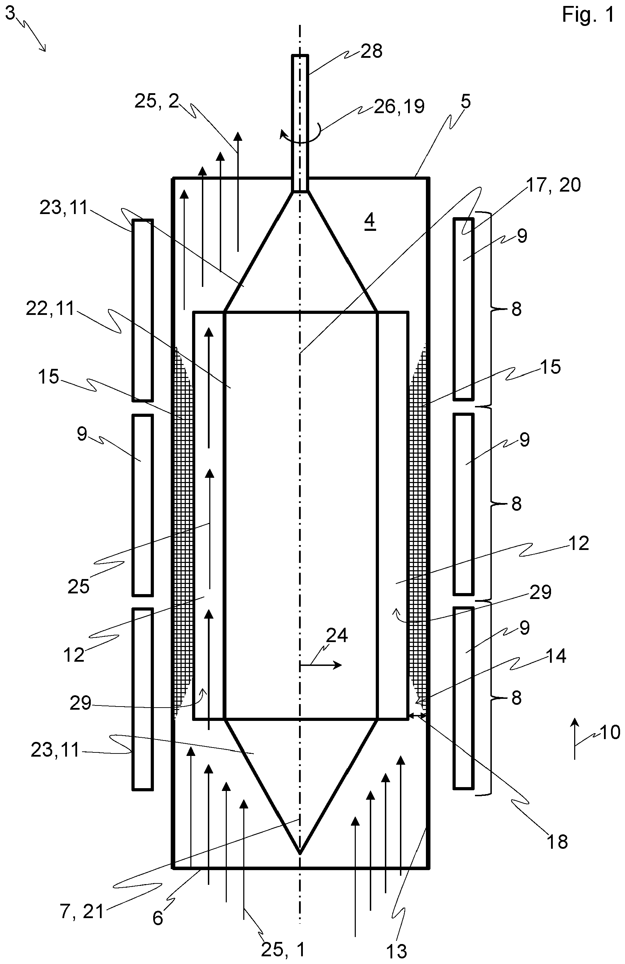

Fig. 1 zeigt eine erste Ausführungsform einer erfindungsgemäßen Vorrichtung zur Herstellung eines geblähten Granulats 2 aus sandkornförmigem, mineralischem Material mit einem Treibmittel. In den dargestellten Ausführungsbeispielen handelt es sich bei dem mineralischen Material, aus dem das geblähte Granulat 2 hergestellt wird, um Perlitsand 1, der gebundenes Wasser als Treibmittel enthält.

Die Vorrichtung umfasst einen Ofen 3 mit einem im Wesentlichen senkrecht stehenden Ofenschacht 4, der ein oberes Ende 5 und ein unteres Ende 6 aufweist, wobei zwischen den beiden Enden 5, 6 eine Förderstrecke 7 verläuft, welche durch mehrere, in einer Förderrichtung 10 voneinander getrennt angeordnete Heizzonen 8 führt. Die Förderrichtung 10 ist im Wesentlichen parallel zur Schwerkraftrichtung und kann dabei prinzipiell in Schwerkraftrichtung oder gegen die Schwerkraftrichtung weisen. In den dargestellten Ausführungsbeispielen weist die Förderrichtung 10 gegen die Schwerkraftrichtung, d.h. vom unteren Ende 6 zum oberen Ende 5.

Die Heizzonen 8 weisen jeweils zumindest ein voneinander unabhängig steuerbares Heizelement 9 auf, um den Perlitsand 1 zumindest auf eine kritische Temperatur zu erhitzen und die Perlitsandkörner 1 zu blähen. Insbesondere kann es sich bei den Heizelementen 9 um elektrische Heizelemente 9 handeln.

Weiters ist mindestens ein Zuführmittel (nicht dargestellt) vorgesehen, das dazu eingerichtet ist, zumindest den ungeblähte Perlitsand 1 an einem der beiden Enden 5, 6 des Ofenschachts 4 in Richtung des anderen der beiden Enden 6, 5 des Ofenschachts 4 in den Ofenschacht 4 aufzugeben, um den Perlitsand 1 in Förderrichtung 10 gesehen in der letzten Hälfte, vorzugsweise im letzten Drittel, der Förderstrecke 7 zu blähen. Bei den dargestellten Ausführungsbeispielen erfolgt die Aufgabe des ungeblähten Perlitsands 1 am unteren Ende 6 in Richtung oberes Ende 5, wobei das geblähte Granulat 2 am oberen Ende 5 austritt. Als Zuführmittel kann hierfür z.B. eine mit einem Ventilator zusammenarbeitende Ansaug-Düse (nicht dargestellt) vorgesehen sein, die dem Ofenschacht 4 vorgeschaltet und dazu eingerichtet ist, den ungeblähten Perlitsand 1 gemeinsam mit einer Luftmenge am unteren Ende 6 des Ofenschachts 4 in Richtung oberes Ende 5 in den Ofenschacht 4 einzusaugen Die Luftmenge bildet dabei eine von unten nach oben strömende Luftströmung aus, mittels welcher der Perlitsand 1 als Partikelströmung 25 von unten nach oben entlang der Förderstrecke 7 gefördert wird, um in der oberen Hälfte, vorzugsweise im obersten Drittel, der Förderstrecke 7 gebläht zu werden.

In einem Betriebszustand der Vorrichtung kommt es zu Anbackungen 15 bzw. Agglomerationen von Perlitsand 1, der teilweise auch bereits gebläht sein kann, an einer Innenwand 13 des Ofenschachts 4.

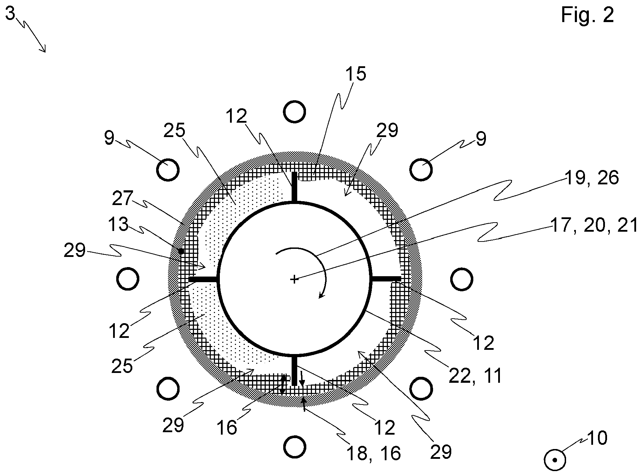

In den dargestellten Ausführungsbeispielen der erfindungsgemäßen Vorrichtung ist jeweils ein drehbarer Schachteinsatz 11 vorgesehen, der im Ofenschacht 4 angeordnet ist, wobei eine Antriebswelle 28 des Schachteinsatzes 11 aus dem oberen Ende 5 des Ofenschachts 4 herausragt. Der Schachteinsatz 11 weist mindestens eine Abstreifklinge 12 auf, die mit der Innenwand 13 des Ofenschachts 4 zumindest einen eine Spaltbreite 18 aufweisenden Spalt 14 ausbildet und dazu eingerichtet ist, bei Drehung des Schachteinsatzes 11 im Betriebszustand der Vorrichtung die im Spalt 14 angeordneten Anbackungen 15 auf der Innenwand 13 abschnittsweise abzutragen, wenn eine Dicke 16 der Anbackungen 15, vgl. Fig. 2, größer als die jeweilige Spaltbreite 18 ist.

Die Spaltbreite 18 liegt typischerweise im Bereich von 2 mm bis 5 mm.

D.h. im Betriebszustand der Vorrichtung, wenn der Perlitsand 1 durch den Ofenschacht 4 gefördert und in diesem gebläht wird, ist der Spalt 14 innerhalb kurzer Zeit mit Anbackungen 15 belegt. Diese Anbackungen 15 werden sodann kontinuierlich mittels der zumindest einen Abstreifklinge 12 abgetragen, wenn sich der Schachteinsatz 11 dreht. Durch das Abtragen wird die Dicke 16 der Anbackungen 15 begrenzt und bleibt annähernd konstant, genauer in einem gewissen Bereich rund um die Spaltbreite 18. Diese annähernd konstante, annähernd gleichmäßige Dicke 16 der Anbackungen 15 garantiert eine annähernd konstante Strahlungsintensität, die mittels der Heizelemente 9 in den Ofenschacht 4 - durch die Anbackungen 15 hindurch - eingebracht werden kann. Der resultierende, annähernd bzw. im Wesentlichen konstante Energieeintrag in den Ofenschacht 4 sorgt wiederum für eine gleichmäßige Blähung und gewährleistet (im Wesentlichen während des gesamten Betriebs der Vorrichtung) ein im Wesentlichen konstantes Expansionsergebnis. Zur gleichmäßigen Blähung bzw. zum konstanten und definierten Expansionsergebnis trägt außerdem bei, dass sich die Perlitsandkörner 1 im Ofenschacht 4 als Partikelströmung 25 entlang der Förderstrecke 7 weitestgehend in wohldefinierten Bewegungsbereichen 29 zwischen der mindestens einen Abstreifklinge 12, dem restlichen Schachteinsatz 11 und den Anbackungen 15 bewegen. Entsprechend kann die Verweilzeit der Perlitsandkörner 1 im Ofenschacht 4 - und damit der Blähvorgang bzw. das Blähresultat - recht genau festgelegt bzw. kontrolliert werden.

In den dargestellten Ausführungsbeispielen ist der Schachteinsatz 11 in einer Drehrichtung 26 - und ggf. auch gegen die Drehrichtung 26 - um eine Drehachse 20 drehbar, die parallel zu einer Längsachse 21 des Ofenschachts 4 verläuft und mit dieser sowie mit einem radialen Zentrum 17 des Ofenschachts 4 zusammenfällt.

Die Antriebswelle 28 dient zum einen zur drehbaren Lagerung des Schachteinsatzes 11 im Bereich des oberen Endes 5 des Ofenschachts 4. Im Bereich des unteren Endes 6 des Ofenschachts 4 ist der Schachteinsatz 11 schwimmend gelagert, beispielsweise mittels eines Zentrierstifts (nicht dargestellt), der entlang der Drehachse 20 verläuft und parallel zu dieser beweglich gelagert ist.

Zum anderen können an der Antriebswelle 28 Antriebsmittel (nicht dargestellt) angreifen, um den Schachteinsatz 11 zu drehen. In den dargestellten Ausführungsbeispielen sind die Antriebsmittel zur Drehung des Schachteinsatzes 11 mit einer variablen Drehgeschwindigkeit eingerichtet, wobei die Drehgeschwindigkeit bevorzugt im Bereich von 0,125 U/min bis 3 U/min, besonders bevorzugt im Bereich von 0,5 U/min bis 2 U/min, liegt.

In den dargestellten Ausführungsbeispielen weist der Schachteinsatz 11 einen im Wesentlichen drehzylinderförmigen Basiskörper 22 auf, von dem die mindestens eine Abstreifklinge 12 mit einem Richtungsanteil parallel zu einer Radialrichtung 24 absteht, wobei die Radialrichtung 24 in einer Ebene normal auf die Drehachse 20 des Schachteinsatzes 11 liegt und von der Drehachse 20 ausgehend von dieser weg weist. In Förderrichtung 10 gesehen ist vor und nach dem Basiskörper 22 jeweils ein sich verjüngender Schachteinsatzabschnitt 23 angeordnet, der an den Basiskörper 22 bündig anschließt. Die Verjüngung erfolgt jeweils entlang der Drehachse 20 und vom Basiskörper 22 weg weisend. An den in Förderrichtung 10 gesehen hinteren Schachteinsatzabschnitt 23 schließt die Antriebswelle 28 an.

Der Basiskörper 22 sowie die Schachteinsatzabschnitte 23 sind im Wesentlichen geschlossen ausgebildet, sodass die Perlitsandkörner 1 nicht in den Schachteinsatz 11 gelangen können. Entsprechend kann sich die Partikelströmung 25 praktisch ausschließlich in den Bewegungsbereichen 29 entlang der Förderstrecke 7 bewegen, wobei die Partikelströmung 25 durch die sich verjüngende Form der Schachteinsatzabschnitte 23 strömungsgünstig in die Bewegungsbereiche 29 und aus diesen wieder heraus geleitet wird. Vorzugsweise ist der Schachteinsatz 11 hohl mit einem Innenraum ausgebildet, wobei kleinere Druckentlastungsöffnungen am Basiskörper 22 und/oder an den Schachteinsatzabschnitten 23 vorgesehen sein können, um Luft bzw. Gas, die bzw. das sich im Innenraum des Schachteinsatzes 11 befindet und sich temperaturbedingt ausdehnt (bzw. zusammenzieht), den Durchtritt aus dem (bzw. in den) Innenraum des Schachteinsatzes 11 zu ermöglichen und so einen Druckausgleich zu bewirken.

In den dargestellten Ausführungsbeispielen ist der Schachteinsatz 11 aus demselben Material gefertigt wie ein die Innenwand 13 ausbildendes Begrenzungselement 27, nämlich aus hochwarmfestem Stahl. Hierdurch ist sichergestellt, dass der Schachteinsatz 11 genauso wie die Innenwand 13 die Temperaturen, die im Betriebszustand der Vorrichtung im Ofenschacht 4 während des Blähens auftreten können, problemlos aushält. Weiters hat die gleiche Materialwahl auch gleiche Wärmeausdehnungskoeffizienten zur Folge, wodurch ein Verzug durch unterschiedliche Wärmeausdehnung vermieden und eine gleichbleibende Form bzw. Größe des Spalts 14 sichergestellt werden kann. Indem die Innenwand 13 durch das Begrenzungselement 27 ausgebildet wird, kann die Geometrie der Innenwand 13 bzw. der normal auf die Längsachse 21 stehende (lichte) Querschnitt des Ofenschachts 4 wohldefiniert geformt werden, wobei besagter Querschnitt in den dargestellten Ausführungsbeispielen im Wesentlichen kreisförmig ist.

Im ersten Ausführungsbeispiel, das in Fig. 1 gezeigt ist, sind vier Abstreifklingen 12 vorgesehen, die vom Basiskörper 22 gleichförmig in Radialrichtung 24 abstehen und in einer umfänglichen Richtung 19 um das radiale Zentrum 17 betrachtet hintereinander angeordnet sind, wobei ein Winkelabstand zwischen den Abstreifklingen 12 im Wesentlichen konstant ist. Die Abstreifklingen 12 verlaufen dabei im Wesentlichen geradlinig und parallel zur Förderrichtung 10. Entsprechend ergeben sich vier, rund um das radiale Zentrum 17 symmetrisch angeordnete Bewegungsbereiche 29, die sich parallel zur Förderrichtung 10 geradlinig erstrecken.

Die Spaltbreite 28 ist entsprechend in Förderrichtung 10 gesehen im Wesentlichen konstant. Durch die Drehung des Schachteinsatzes 11 entsteht ein Ringspalt zwischen den Abstreifklingen 12 und der den kreisförmigen lichten Querschnitt des Ofenschachts 4 begrenzenden Innenwand 13, wobei die Spaltbreite 18 in umfänglicher Richtung 19 gesehen im Wesentlichen konstant ist.

Entsprechend können - rein geometrisch betrachtet, ohne Berücksichtigung von in der Praxis möglicherweise auftretenden Verwirbelungen - Perlitsandkörner 1 in der Partikelströmung 25 sich auf Geraden parallel zur Förderrichtung 10 durch die Bewegungsbereiche 29 bewegen. In Fig. 2 ist besagte symmetrische Anordnung der Bewegungsbereiche 29 ersichtlich, wobei aus Klarheitsgründen nur in zwei Bewegungsbereichen 29 die Partikelströmung 25 angedeutet ist.

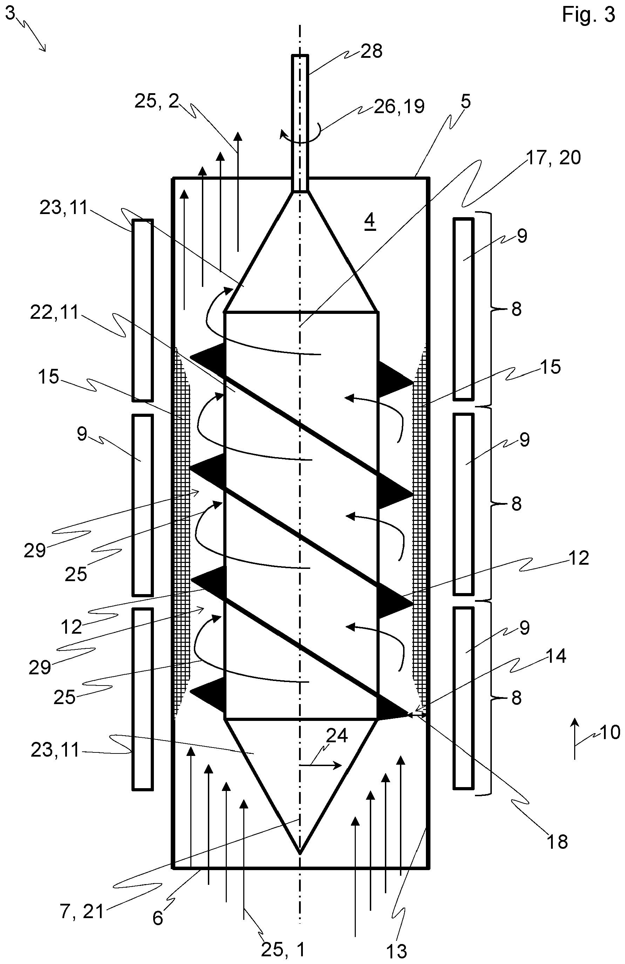

Das zweite Ausführungsbeispiel, welches in Fig. 3 dargestellt ist, unterscheidet sich vom ersten Ausführungsbeispiel lediglich durch die Ausgestaltung der Abstreifklingen 12. Sofern nicht explizit anderes angeführt ist, gilt daher das oben zum ersten Ausführungsbeispiel Gesagte analog auch für das zweite Ausführungsbeispiel und wird daher an dieser Stelle nicht nochmals wiederholt.

Wie aus Fig. 3 hervorgeht, sind beim zweiten Ausführungsbeispiel zwei Abstreifklingen 12 vorgesehen, die vom Basiskörper 22 in Radialrichtung 24 gleichförmig abstehen und jeweils spiralförmig um die Drehachse 20 des Schachteinsatzes 11 verlaufen. Die beiden Spiral- bzw. Schraubenformen der Abstreifklingen 12 sind dabei ineinander geschachtelt.

Entsprechend verlaufen auch die sich ergebenden zwei Bewegungsbereiche 29 spiral- bzw. schraubenförmig um die Drehachse 20. Folglich müssen auch die Perlitsandkörner 1, wenn sie sich in der Partikelströmung 25 durch die Bewegungsbereiche 29 bewegen, der jeweiligen Spiral- bzw. Schraubenform folgen, was - rein geometrisch betrachtet - einen im Vergleich zum ersten Ausführungsbeispiel deutlich längeren Weg der Perlitsandkörner 1 durch den Ofenschacht 4 zur Folge hat. Die thermische Behandlung der Perlitsandkörner 1 im Ofenschacht 4 kann daher vergleichsweise länger und damit noch genauer erfolgen, um das Expansionsergebnis weiter zu optimieren.

Ergänzend sei bemerkt, dass auch beim dargestellten zweiten Ausführungsbeispiel die Spaltbreite 28 in Förderrichtung 10 gesehen im Wesentlichen konstant ist. Ebenso entsteht durch die Drehung des Schachteinsatzes 11 ein Ringspalt zwischen den Abstreifklingen 12 und der den kreisförmigen lichten Querschnitt des Ofenschachts 4 begrenzenden Innenwand 13, wobei die Spaltbreite 18 in umfänglicher Richtung 19 gesehen im Wesentlichen konstant ist.

Schließlich ist anzumerken, dass beim zweiten Ausführungsbeispiel die Wahl der Drehrichtung 26 eine weitere Möglichkeit bietet, die Verweilzeit der Perlitsandkörner 1 im Ofenschacht 4 und damit das Expansionsergebnis zu beeinflussen. Wenn, anders als in Fig. 3 dargestellt, die Drehrichtung 26 im Zusammenspiel mit der konkreten Schraubenform der Abstreifklingen 12 so ist, dass die Bewegungsrichtung einer entsprechenden Schraube entlang der Drehachse 26 entgegengesetzt zur Förderrichtung 10 ist, kann dies effektiv den Weg der Perlitsandkörner 1 wieder reduzieren. Rein theoretisch wäre es dann nämlich denkbar, dass bei "richtiger" Drehzahl und richtiger Strömungsgeschwindigkeit praktisch eine lineare Bewegung der Perlitsandkörner 1 in der Partikelströmung 25 parallel zur Förderrichtung 10 resultieren könnte. Umgekehrt führt beim zweiten Ausführungsbeispiel die in Fig. 3 dargestellte Drehrichtung 26 zu einer Verlängerung der Verweilzeit, da eine spiral- bzw. schraubenförmige Partikelströmung 25 erzwungen wird.

Ein weiterer Aspekt betreffend die Drehrichtung 26 ist, dass diese bei konkret gegebener schraubenförmiger Geometrie der Abstreifklingen 12 darüber entscheidet, ob die Anbackungen 15 vornehmlich an einer Klingen-Oberseite oder an einer Klingen-Unterseite abgestreift werden, wobei in Fig. 3 die Klingen-Unterseite in Förderrichtung 10 gesehen vor der Klingen-Oberseite 10 ist. Vorzugsweise ist, so wie in Fig. 3 dargestellt, die Drehrichtung 26 so gewählt, dass die Klingen-Unterseite die Abstreiffunktion übernimmt, da die Anbackungen 15 dann schwerkraftbedingt nicht auf der jeweiligen Abstreifklinge 12 liegenbleiben, sondern an die Luftströmung übergeben und zusammen mit dem geblähten Granulat 2 ausgetragen werden.

### BEZUGSZEICHENLISTE

- 1: Perlitsand
- 2: Geblähtes Granulat
- 3: Ofen
- 4: Ofenschacht
- 5: Oberes Ende des Ofenschachts
- 6: Unteres Ende des Ofenschachts
- 7: Förderstrecke
- 8: Heizzone
- 9: Heizelement
- 10: Förderrichtung
- 11: Schachteinsatz
- 12: Abstreifklinge
- 13: Innenwand des Ofenschachts
- 14: Spalt
- 15: Anbackung
- 16: Dicke der Anbackung
- 17: Radiales Zentrum des Ofenschachts
- 18: Spaltbreite
- 19: Umfängliche Richtung
- 20: Drehachse
- 21: Längsachse des Ofenschachts
- 22: Basiskörper
- 23: Sich verjüngender Schachteinsatzabschnitt
- 24: Radialrichtung
- 25: Partikelströmung
- 26: Drehrichtung
- 27: Begrenzungselement
- 28: Antriebswelle
- 29: Bewegungsbereich

## Patentansprüche

1. Vorrichtung zur Herstellung eines geblähten Granulats (2) aus sandkornförmigem, mineralischem Material (1) mit einem Treibmittel, beispielsweise zur Herstellung eines geblähten Granulats (2) aus Perlit- (1) oder Obsidiansand mit gebundenem Wasser als Treibmittel, die Vorrichtung umfassend einen Ofen (3) mit einem im Wesentlichen senkrecht stehenden Ofenschacht (4), der ein oberes Ende (5) und ein unteres Ende (6) aufweist, wobei zwischen den beiden Enden (5, 6) eine Förderstrecke (7) verläuft, wobei weiters mindestens ein Zuführmittel vorgesehen ist, das dazu eingerichtet ist, zumindest das ungeblähte Material (1) an einem der beiden Enden (5, 6) des Ofenschachts (4) in Richtung des anderen der beiden Enden (6, 5) des Ofenschachts (4) in den Ofenschacht (4) aufzugeben, um das Material (1) in einer Förderrichtung (10) gesehen in der letzten Hälfte, vorzugsweise im letzten Drittel, der Förderstrecke (7) zu blähen, wobei zumindest ein drehbarer Schachteinsatz (11) vorgesehen ist, der zumindest abschnittsweise im Ofenschacht (4) angeordnet ist und mindestens eine Abstreifklinge (12) aufweist, die mit einer Innenwand (13) des Ofenschachts (4) zumindest einen eine Spaltbreite (18) aufweisenden Spalt (14) ausbildet und dazu eingerichtet ist, bei Drehung des zumindest einen Schachteinsatzes (11) in einem Betriebszustand der Vorrichtung Anbackungen (15) auf der Innenwand (13) abschnittsweise abzutragen, wenn eine Dicke (16) der Anbackungen (15) größer als die jeweilige Spaltbreite (18) ist,
wobei der zumindest eine Schachteinsatz (11) um zumindest eine Drehachse (20) drehbar ist, die parallel zu einer Längsachse (21) des Ofenschachts (4) verläuft, wobei vorzugsweise die zumindest eine Drehachse (20) mit der Längsachse (21) zusammenfällt,
**dadurch gekennzeichnet, dass** die Förderstrecke (7) durch mehrere, in einer Förderrichtung (10) voneinander getrennt angeordnete Heizzonen (8) führt, wobei die Heizzonen (8) jeweils zumindest ein voneinander unabhängig steuerbares Heizelement (9) aufweisen, um das Material (1) zumindest auf eine kritische Temperatur zu erhitzen und die Sandkörner (1) zu blähen,
und dass der zumindest eine Schachteinsatz (11) jeweils einen Basiskörper (22) aufweist, von dem die mindestens eine Abstreifklinge (12) mit einem Richtungsanteil parallel zu einer Radialrichtung (24) absteht, wobei die Radialrichtung (24) in einer Ebene normal auf die Drehachse (20) des jeweiligen Schachteinsatzes (11) liegt und von der jeweiligen Drehachse (20) ausgehend von dieser weg weist, wobei der jeweilige Basiskörper (22) zumindest in Radialrichtung (24) gesehen im Wesentlichen geschlossen ist.

2. Vorrichtung nach Anspruch 1, **dadurch gekennzeichnet, dass** der zumindest eine Schachteinsatz (11) im Bereich des oberen Endes (5) des Ofenschachts (4) drehbar gelagert ist, wobei vorzugsweise der zumindest eine Schachteinsatz (11) im Bereich des unteren Endes (6) des Ofenschachts schwimmend gelagert ist.

3. Vorrichtung nach einem der Ansprüche 1 bis 2, **dadurch gekennzeichnet, dass** der zumindest eine Schachteinsatz (11) mehrere, bevorzugt höchstens acht, besonders bevorzugt zwei bis vier, Abstreifklingen (12) aufweist.

4. Vorrichtung nach Anspruch 3, **dadurch gekennzeichnet, dass** in einer umfänglichen Richtung (19) rund um ein radiales Zentrum (17) des Ofenschachts (4) gesehen zumindest zwei der Abstreifklingen (12) hintereinander angeordnet sind.

5. Vorrichtung nach einem der Ansprüche 3 bis 4, **dadurch gekennzeichnet, dass** zumindest zwei der Abstreifklingen (12) mit der Innenwand (13) Spalte (14) mit unterschiedlichen Spaltbreiten (18) ausbilden.

6. Vorrichtung nach einem der Ansprüche 1 bis 5, **dadurch gekennzeichnet, dass** zumindest ein Antriebsmittel zur Drehung des zumindest einen Schachteinsatzes (11) mit einer variablen Drehgeschwindigkeit vorgesehen ist, wobei das zumindest eine Antriebsmittel dazu eingerichtet ist, die Drehgeschwindigkeit bevorzugt im Bereich von 0,125 U/min bis 3 U/min, besonders bevorzugt im Bereich von 0,5 U/min bis 2 U/min, einzustellen.

7. Vorrichtung nach einem der Ansprüche 1 bis 6, **dadurch gekennzeichnet, dass** der jeweilige Basiskörper (22) im Wesentlichen drehzylinderförmig ist, wobei vorzugsweise in Förderrichtung (10) gesehen vor und/oder nach dem jeweiligen Basiskörper (22) ein sich entlang der Drehachse (20) und vom Basiskörper (22) weg verjüngender Schachteinsatzabschnitt (23), insbesondere bündig, anschließt.

8. Vorrichtung nach einem der Ansprüche 1 bis 7, **dadurch gekennzeichnet, dass** die mindestens eine Abstreifklinge (12) am jeweiligen Basiskörper (22) aus-/einfahrbar und/oder verschwenkbar angeordnet ist, um die Spaltbreite (18) einstellen zu können.

9. Vorrichtung nach einem der Ansprüche 1 bis 8, **dadurch gekennzeichnet, dass** die mindestens eine Abstreifklinge (12) im Wesentlichen geradlinig verläuft, vorzugsweise parallel zur Förderrichtung (10).

10. Vorrichtung nach einem der Ansprüche 1 bis 9, **dadurch gekennzeichnet, dass** die mindestens eine Abstreifklinge (12) zumindest abschnittsweise spiralförmig bzw. schraubenförmig um eine Drehachse (20) des jeweiligen Schachteinsatzes (11) verläuft.

11. Vorrichtung nach Anspruch 10, **dadurch gekennzeichnet, dass** in einer umfänglichen Richtung (19) rund um ein radiales Zentrum (17) des Ofenschachts (4) gesehen die Spaltbreite (18) variiert.

12. Vorrichtung nach einem der Ansprüche 1 bis 11, **dadurch gekennzeichnet, dass** in Förderrichtung (10) gesehen die Spaltbreite (18) des mindestens einen Spalts (14) variiert.

13. Vorrichtung nach einem der Ansprüche 1 bis 12, **dadurch gekennzeichnet, dass** die Innenwand (13) durch mindestens ein Begrenzungselement (27) ausgebildet ist, welches vorzugsweise aus hochwarmfestem Stahl gefertigt ist, und dass der zumindest eine Schachteinsatz (11) aus dem gleichen Material wie das mindestens eine Begrenzungselement (27) gefertigt ist.

## Claims

1. Device for producing an expanded granulated material (2) from mineral material (1) in the form of grains of sand with an expanding agent, for example for producing an expanded granulated material (2) from perlite (1) or obsidian sand with bound water as expanding agent, the device comprising a furnace (3) with a substantially vertically standing furnace shaft (4) having an upper end (5) and a lower end (6), wherein a conveying section (7) extends between the two ends (5, 6), wherein further at least one feeding means is provided which is designed to charge at least the unexpanded material (1) at one of the two ends (5, 6) of the furnace shaft (4) into the furnace shaft (4) in the direction of the other of the two ends (6, 5) of the furnace shaft (4) in order to expand the material (1), as seen in a conveying direction (10), in the last half, preferably in the last third, of the conveying section (7), wherein at least one rotatable shaft insert (11) is provided which is arranged at least in sections in the furnace shaft (4) and has at least one scraper blade (12) which forms with an inner wall (13) of the furnace shaft (4) at least one gap (14) having a gap width (18) and which is designed, during rotation of the at least one shaft insert (11) in an operating state of the device, to remove caking (15) on the inner wall (13) in sections if a thickness (16) of the caking (15) is greater than the respective gap width (18),
wherein the at least one shaft insert (11) is rotatable about at least one axis of rotation (20) which extends parallel to a longitudinal axis (21) of the furnace shaft (4), wherein preferably the at least one axis of rotation (20) coincides with the longitudinal axis (21),
**characterised in that** the conveying section (7) leads through a plurality of heating zones (8) which are arranged separately from one another in a conveying direction (10), wherein the heating zones (8) each comprise at least one heating element (9) which can be controlled independently of one another in order to heat the material (1) at least to a critical temperature and to expand the sand grains (1),
and **in that** the at least one shaft insert (11) each comprises a base body (22) from which the at least one scraper blade (12) projects with a directional portion parallel to a radial direction (24), wherein the radial direction (24) lies in a plane normal to the axis of rotation (20) of the respective shaft insert (11) and, starting from the respective axis of rotation (20), faces away therefrom, wherein the respective base body (22), as viewed at least in the radial direction (24), is substantially closed.

2. Device according to claim 1, **characterised in that** the at least one shaft insert (11) is rotatably mounted in the region of the upper end (5) of the furnace shaft (4), wherein preferably the at least one shaft insert (11) is floatingly mounted in the region of the lower end (6) of the furnace shaft.

3. Device according to any one of claims 1 to 2, **characterised in that** the at least one shaft insert (11) has a plurality of, preferably at most eight, particularly preferably two to four, scraper blades (12).

4. Device according to claim 3, **characterised in that** at least two of the scraper blades (12) are arranged one behind the other as viewed in a circumferential direction (19) around a radial centre (17) of the furnace shaft (4).

5. Device according to any one of claims 3 to 4, **characterised in that** at least two of the scraper blades (12) form gaps (14) with the inner wall (13) having different gap widths (18).

6. Device according to any one of claims 1 to 5, **characterised in that** at least one drive means is provided for rotating the at least one shaft insert (11) at a variable rotational speed, wherein the at least one drive means is designed to set the rotational speed preferably in the range from 0.125 rpm to 3 rpm, particularly preferably in the range from 0.5 rpm to 2 rpm.

7. Device according to any one of claims 1 to 6, **characterised in that** the respective base body (22) is substantially rotationally cylindrical, wherein preferably, as seen in the conveying direction (10) upstream and/or downstream of the respective base body (22), a shaft insert section (23) tapering along the axis of rotation (20) and away from the base body (22) adjoins, in particular in a flush manner.

8. Device according to any one of claims 1 to 7, **characterised in that** the at least one scraper blade (12) is arranged on the respective base body (22) such that it can be extended/retracted and/or pivoted in order to be able to adjust the gap width (18).

9. Device according to any one of claims 1 to 8, **characterised in that** the at least one scraper blade (12) extends substantially in a straight line, preferably parallel to the conveying direction (10).

10. Device according to any one of claims 1 to 9, **characterised in that** the at least one scraper blade (12) extends at least in sections in a spiral or helical shape about an axis of rotation (20) of the respective shaft insert (11).

11. Device according to claim 10, **characterised in that,** as viewed in a circumferential direction (19) around a radial centre (17) of the furnace shaft (4), the gap width (18) varies.

12. Device according to any one of claims 1 to 11, **characterised in that** the gap width (18) of the at least one gap (14) varies as viewed in the conveying direction (10).

13. Device according to any one of claims 1 to 12, **characterised in that** the inner wall (13) is formed by at least one limiting element (27) which is preferably made of high-temperature resistant steel, and **in that** the at least one shaft insert (11) is made of the same material as the at least one limiting element (27).

## Revendications

1. Dispositif de fabrication de granulés expansés (2) à partir d'un matériau (1) minéral, en forme de grain de sable avec un agent d'expansion, par exemple de fabrication de granulés expansés (2) à partir de sable de perlite (1) ou d'obsidienne avec de l'eau liée comme agent d'expansion, le dispositif comprenant un four (2) avec un puits de four (4) sensiblement perpendiculaire qui présente une extrémité supérieure (5) et une extrémité inférieure (6), dans lequel une section de transport (7) s'étend entre les deux extrémités (5, 6), dans lequel au moins un moyen d'alimentation est en outre prévu, moyen qui est conçu afin d'introduire au moins le matériau non expansé (1) au niveau d'une des deux extrémités (5, 6) du puits de four (4) en direction de l'autre des deux extrémités (6, 5) du puits de four (4) dans le puits de four (4) afin d'expanser le matériau (1), vu dans un sens de transport (10), dans la dernière moitié, de préférence dans le dernier tiers, de la section de transport (7), dans lequel au moins un insert de puits (11) rotatif est prévu qui est agencé au moins par sections dans le puits de four (4) et présente au moins une lame de raclage (12) qui forme avec une paroi intérieure (13) du puits de four (4) au moins une fente (14) présentant une largeur de fente (18) et est conçu, lors de la rotation de l'au au moins un insert de puits (11) dans un état de fonctionnement du dispositif, afin d'enlever par sections des agglomérations (15) sur la paroi intérieure (13) lorsqu'une épaisseur (16) des agglomérations (15) est supérieure à la largeur de fente (18) respective,
dans lequel le au moins un insert de puits (11) est rotatif autour d'au moins un axe de rotation (20) qui s'étend parallèlement à un axe longitudinal (21) du puits de four (4), dans lequel de préférence, le au moins un axe de rotation (20) coïncide avec l'axe longitudinal (21),
**caractérisé en ce que** la section de transport (7) traverse plusieurs zones de chauffage (8) agencées séparément les unes des autres dans un sens de transport (10), dans lequel les zones de chauffage (8) présentent respectivement au moins un élément de chauffage (9) commandable indépendamment l'un de l'autre afin de chauffer le matériau (1) au moins à une température critique et de souffler les grains de sable (1),
et **en ce que** le au moins un insert de puits (11) présente respectivement un corps de base (22), duquel fait saillie la au moins une lame de raclage (12) avec une portion de direction parallèlement à un sens radial (24), dans lequel le sens radial (24) se trouve dans un plan perpendiculaire à l'axe de rotation (20) de l'insert de puits (11) respectif et, en partant de l'axe de rotation (20) respectif, s'en écarte, dans lequel le corps de base (22) respectif est sensiblement fermé vu au moins dans le sens radial (24).

2. Dispositif selon la revendication 1, **caractérisé en ce que** le au moins un insert de puits (11) est logé de manière rotative dans la zone de l'extrémité supérieure (5) du puits de four (4), dans lequel de préférence, le au moins un insert de puits (11) est logé de manière flottante dans la zone de l'extrémité inférieure (6) du puits de four.

3. Dispositif selon l'une quelconque des revendications 1 à 2, **caractérisé en ce que** le au moins un insert de puits (11) présente plusieurs, de préférence au plus huit, le plus préférentiellement deux à quatre, lames de raclage (12).

4. Dispositif selon la revendication 3, **caractérisé en ce que** au moins deux des lames de raclage (12) sont agencées l'une derrière l'autre vu dans un sens circonférentiel (19) autour d'un centre radial (17) du puits de four (4), .

5. Dispositif selon l'une quelconque des revendications 3 à 4, **caractérisé en ce que** au moins deux des lames de raclage (12) forment des fentes (14) avec la paroi intérieure (13) avec différentes largeurs de fente (18).

6. Dispositif selon l'une quelconque des revendications 1 à 5, **caractérisé en ce que** au moins un moyen d'entraînement est prévu pour la rotation de l'au moins un insert de puits (11) avec une vitesse de rotation variable, dans lequel le au moins un moyen d'entraînement est conçu afin de régler la vitesse de rotation de préférence dans la plage de 0,125 tr/min à 3 tr/min, le plus préférentiellement dans la plage de 0,5 tr/min à 2 tr/min.

7. Dispositif selon l'une quelconque des revendications 1 à 6**caractérisé en ce que** le corps de base (22) respectif est sensiblement cylindrique rotationnellement, dans lequel de préférence une section d'insert de puits (23) se rétrécissant le long de l'axe de rotation (20) et loin du corps de base (22) se raccorde en particulier à fleur vu dans le sens de transport (10) en amont et/ou en aval du corps de base (22) respectif.

8. Dispositif selon l'une quelconque des revendications 1 à 7, **caractérisé en ce que** le au moins une lame de raclage (12) est agencée au niveau du corps de base (22) respectif de manière déployable/rétractable et/ou pivotante afin de pouvoir régler la largeur de fente (18).

9. Dispositif selon l'une quelconque des revendications 1 à 8, **caractérisé en ce que** la au moins une lame de raclage (12) s'étend sensiblement de manière rectiligne, de préférence parallèlement au sens de transport (10).

10. Dispositif selon l'une quelconque des revendications 1 à 9, **caractérisé en ce que** la au moins une lame de raclage (12) s'étend au moins par sections en forme de spirale ou d'hélice autour d'un axe de rotation (20) de l'insert de puits (11) respectif.

11. Dispositif selon la revendication 10, **caractérisé en ce que** la largeur de fente (18) varie vu dans un sens circonférentiel (19) autour d'un centre radial (17) du puits de four (4).

12. Dispositif selon l'une quelconque des revendications 1 à 11, **caractérisé en ce que** la largeur de fente (18) de la au moins une fente (14) varie vu dans le sens de transport (10).

13. Dispositif selon l'une quelconque des revendications 1 à 12, **caractérisé en ce que** la paroi intérieure (13) est réalisée par au moins un élément de délimitation (27) qui est fabriqué de préférence en acier à haute résistance thermique, et **en ce que** le au moins un insert de puits (11) est fabriqué à partir du même matériau que le au moins un élément de délimitation (27).
